Europäisches Patentamt

European Patent Office

Office européen des brevets

(11) Publication number: **0 501 456 A2**

# EUROPEAN PATENT APPLICATION

(21) Application number: **92103282.7**

(22) Date of filing: **26.02.92**

(51) Int. Cl.⁵: **A63F 9/22**, G11B 31/00

(30) Priority: **26.02.91 JP 30554/91**
**26.02.91 JP 30555/91**
**26.02.91 JP 30556/91**

(43) Date of publication of application:
**02.09.92 Bulletin 92/36**

(84) Designated Contracting States:
**DE FR GB**

(71) Applicant: **SONY CORPORATION**
**7-35, Kitashinagawa 6-chome Shinagawa-ku**
**Tokyo(JP)**

(72) Inventor: **Aramaki, Keiji**
**c/o Sony Corporation, 7-35 Kitashinagawa**
**6-chome**
**Shinagawa-ku, Saitama, Tokyo(JP)**
Inventor: **Shinjo, Sadaaki**
**c/o Sony Corporation, 7-35 Kitashinagawa**
**6-chome**
**Shinagawa-ku, Kanagawa, Tokyo(JP)**

(74) Representative: **Körber, Wolfhart, Dr. Dipl.-Ing.**
**et al**
**Patentanwälte Mitscherlich & Partner**
**Steinsdorfstrasse 10**
**W-8000 München 22(DE)**

(54) **Video game computer provided with an optical disc drive.**

(57) A game computer (1) utilizes a 16-bit CPU and accepts either ROM game cartridges via a cartridge port (7) provided on an upper face thereof or optical disks via a disc drive (20) provided within the computer casing (2). The cartridge port (7) and the disc drive (20) may be configured in a variety of ways allowing various convenient and compact options for using and for manufacturing the unit.

**FIG.1**

## BACKGROUND OF THE INVENTION

### Field of The Invention

The present invention relates generally to game computer. Particularly a game system such as a home video game computer which may utilize ROM cartridges, or IC cards, and optical disks.

### Description of The Prior Art

A video game computer is well known in the art which accepts cartridges or IC cards containing ROM software and displays game action on a television set or monitor for interactive play. An example of such a game computer is Nintendo's Super Family Computer (trade name). Recently, optical disk systems have been developed which also may be utilized for such games as described above, which have the advantage of extended memory which may increase game length, complexity or an amount of graphic information. Therefore, it is advantageous that existing, cartridge or card based game systems be connectable to, or integrated with optical disk systems.

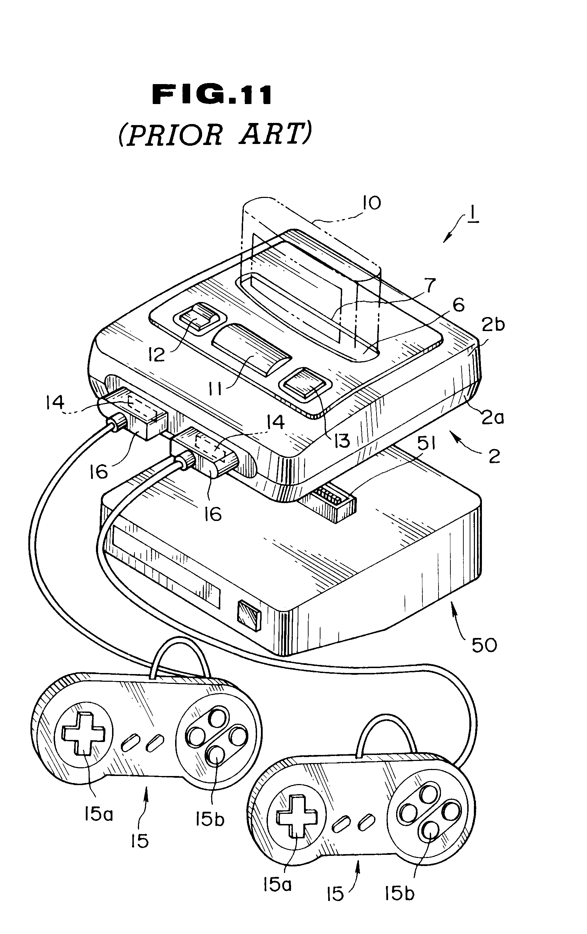

Referring to Fig. 11, a TV game computer 1 generally consists of a casing 2 including a lower casing 2a and an upper casing 2b. Within the lower casing 2a is a chassis mounting a 16 bit CPU (not shown) as well as a connector (not shown) for receiving a ROM cartridge 10 containing a ROM program, usually a game program.

On the upper casing 2b, at a position opposing the connector, a movable cover portion 6 is provided for protecting the connector from dust, etc., when a cartridge is not loaded. The cover portion 6 is mounted so as to close a cartridge port 7 for guiding the ROM cartridge 10 into position and stably supporting same when inserted into the connector. The upper casing 2b further includes a cartridge eject button 11, a power switch 12, and a reset button 13.

At a front facing portion of the casing 2, a pair of controller connectors 14, 14 is provided. A game controller 15 is connected to each controller connector 14, respectively via a connector 16, which mates with pne of the controller connectors 14. Each controller 15 includes a cursor moving key 15a and play buttons 15b. Finally, the system is connected to a video monitor, television, or CRT (not shown) for displaying game images.

However, in prior art systems, as shown in Fig. 11, when an optical disk drive 50 is externally connected to the body of the game apparatus via a connector 51, mating with another connector installed on a bottom surface of the lower casing 2a, the system becomes bulky and complex. In addition the size becomes large and the connectors are delicate and subject to stress so it becomes difficult to move the interconnected apparatus conveniently and stably. In addition for a user to enjoy using both of cartridge based and disk based software it is required to purchase two different units which increases the expense of the system.

## SUMMARY OF THE INVENTION

It is therefore a principal object of the present invention to provide a game computer which may accept ROM cartridges as well as optical disks in a single integrated unit.

It is a further object of the present invention to provide a game computer which is small in size, sturdy in construction and may be easily and safely moved about.

In order to accomplish the aforementioned and other objects, a ROM computer according to the present invention comprises: a ROM computer comprising: a CPU; first recieving means, associated with the CPU, for connectably recieving a first software medium; second recieving means, associated with the CPU, for connectably recieving a second software medium; control means allowing interactive use of the first or second software mediums; a casing, receiving at least the first receiving means, the and second receiving means, and the CPU therein.

According to another aspect of the present invention, a video game computer according to the present invention comprises: a 16 bit CPU; a cartridge port associated with the CPU for receiving ROM cartridges therein; an optical disk drive associated with the CPU for receiving an optical disk therein; a casing enclosing the cartridge port and the optical disk drive therein and having therein a substrate for mounting at least the CPU and a connector of the cartridge port; control means for interactive control of software contained in the ROM cartridge or on the optical disk.

## BRIEF DESCRIPTION OF THE DRAWINGS

In the drawings:

Fig. 1 shows a perspective view of a ROM computer according to a first embodiment of the present invention.

Fig. 2 shows a cross-sectional view of the ROM computer of Fig. 1.

Fig. 3 shows a perspective view of a ROM computer according to a second embodiment of the present invention.

Fig. 4 is a side cross-sectional view of the ROM computer of Fig. 3 showing the arrangement of a disk drive unit therein.

Fig. 5 shows a plan view of a disc drive utilized in the first and second embodiments of a ROM computer according to the present invention as shown in Figs. 1 and 3.

Fig. 6 is a perspective view of a third embodiment of a ROM computer according to the present invention.

Fig. 7 is a perspective view of a fourth embodiment of a ROM computer according to the present invention.

Fig. 8 is a cross-sectional view, taken along line A - A of Fig. 6, showing the arrangement of a disk drive unit in the ROM computer of the third embodiment.

Fig. 9 shows a plan view of a disc drive and cartridge port arrangement utilized in the third and fourth embodiments of a ROM computer according to the present invention as shown in Figs. 6 and 7.

Fig. 10 is a perspective view of a fifth embodiment of a ROM computer according to the present invention.

Fig. 11 Shows a game computer and connecting optical disk unit according to the prior art.

## DESCRIPTION OF THE PREFERRED EMBODIMENT

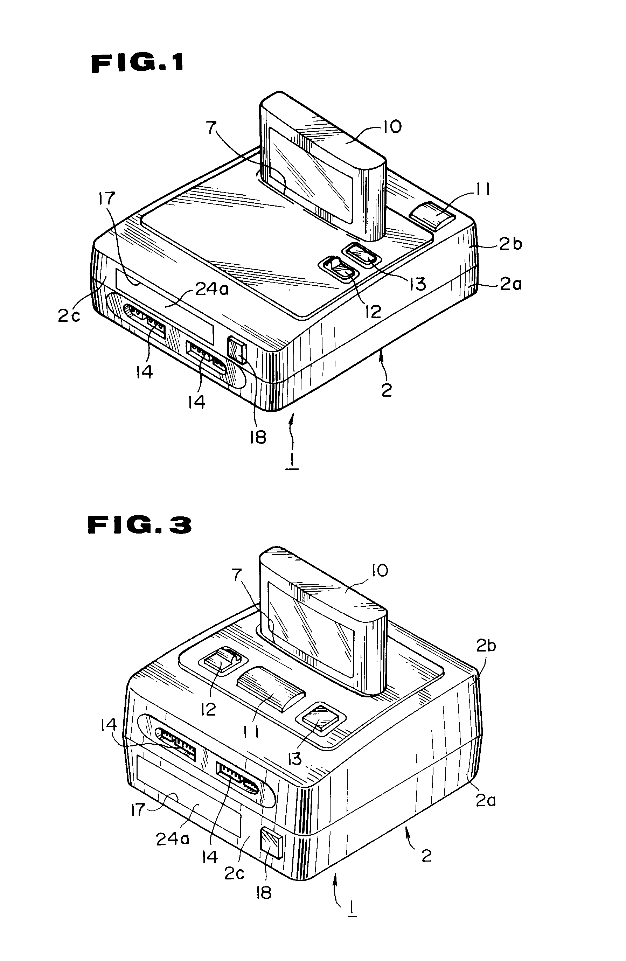

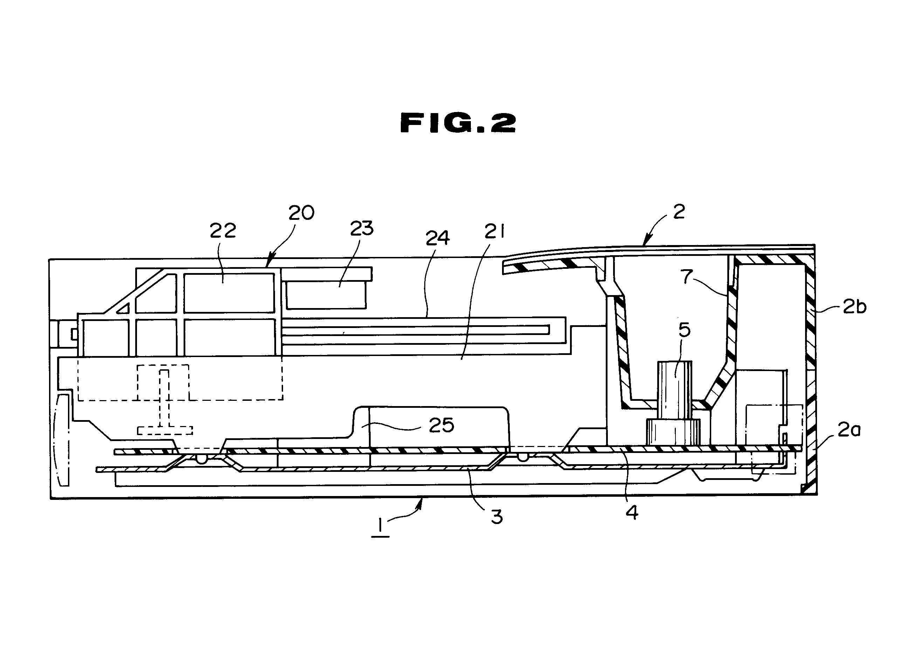

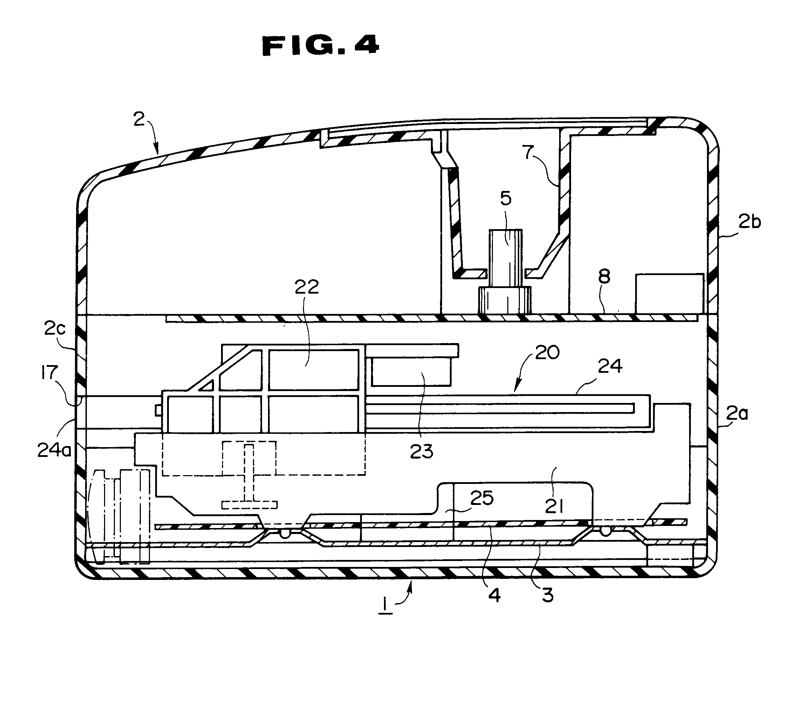

Referring now to the drawings, particularly to Figs. 1 and 2, a game computer 1 according to the present invention will be described omitting detailed description of elements which have been detailed in the above description of the prior art (Fig. 11). In the following description of the embodiments, like numerals will be used to indicate like parts of the various embodiments to avoid redundant disclosure.

The ROM computer according to the present embodiment includes the elements described above with the exception of the bottom surface connector for connecting to an external disk drive. Instead, a disk drive 20 is provided within the casing 2. That is, the casing 2 is formed of a open box-like lower casing 2a, the upper edges of which mate with corresponding lower edges of an upper casing 2b.

As seen in Fig. 2, at a bottom interior portion of the lower casing 2a, a chassis 3 is provided. The chassis 3 serves to mount a 16-bit CPU , for example which may be comprised of an IC chip or the like (not shown). A substrate 4 is supported by the chassis 3, and a connector 5 for receiving software, in this case a ROM cartridge 10, is mounted on the substrate 4. Further, on a front vertical portion of the lower casing 2a, connectors 14, 14 are provided for connecting the game computer 1 to controllers 15, 15 via sliding engagement with connectors 16 of the controllers 15.

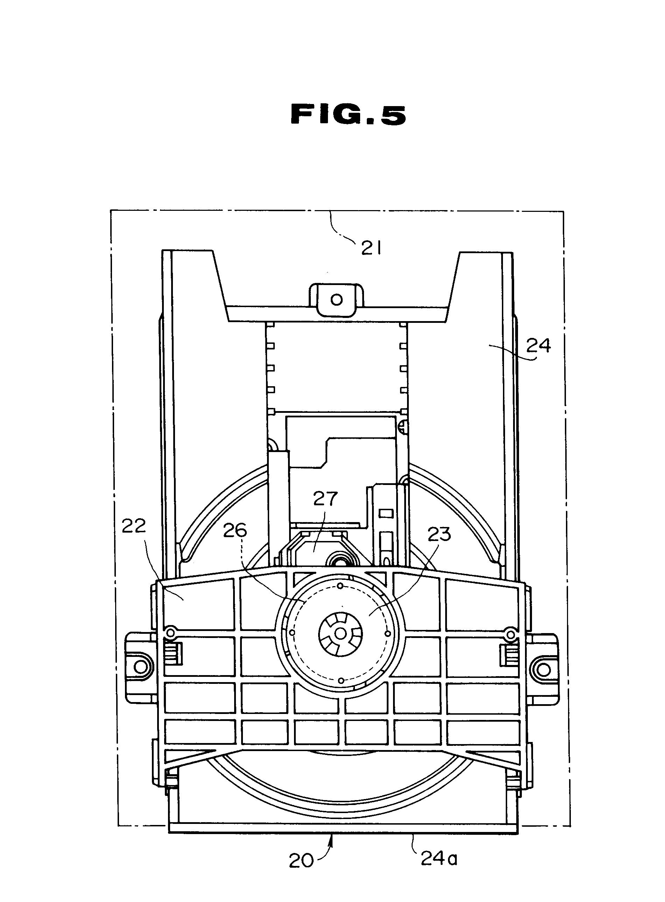

Above the substrate 4, at a portion in front of the position of the (cartridge) connector 5, a disk drive (optical disk drive) unit 20 is supported. That is, the substrate 4 is sandwiched between the chassis 3 and a support framework 21 which in turn supports the disk drive unit 20. A center chuck 23 is disposed rotatably and slidably along the support framework 21 by a chuck arm 22 which is also movable in upward and downward directions. The chuck arm 22 is supported at both sides thereof so as to allow a space thereunder for insertion of an 8cm or 12cm optical disk (not shown). A spindle motor 25 is provided at a position under a disk loaded position and driving a turntable 26 for rotating the optical disk when the drive 20 is in use. Referring to Fig. 5, the turntable 26 is provided opposing the chuck 23 for rotatably supporting a disk therebetween and a disk tray 24 is provided for allowing convenient loading and unloading of disks. The chuck arm 22 is slidingly supported at edge portions of the disk tray 24. and further, provided on the support framework 21, a guide shaft (not shown) is provided for guiding an optical pick-up 27, for example, in a radial direction of a disk when the disk drive 20 is operational. The upper portion of the disk drive unit 20 is received in the upper casing 2b when the casing upper and lower portions 2b, 2a are assembled. The optical disk drive 20 may be a CD ROM (Read only memory) drive for reading ROM CDs for example.

Again with reference to Figs. 1 and 2, and arrangement of the upper casing 2b will be explained. Formed in a portion of the upper casing 2b, so as to oppose a location of the connector 5 mounted on the substrate 4, a cartridge port 7 is formed for guiding an inserted ROM cartridge 10 into engagement with the connector 5 and further providing support for the inserted cartridge. Disposed at one side of the cartridge port 7, an eject button 11 is provided which is associated with the connector 5 and the cartridge port 7 so as to allow smooth removal of a ROM cartridge 10. Also, on the same side of the upper casing 2b as the eject button 11, a power switch 12 and a reset button 13 are respectively disposed.

The casing 2 includes a substantially vertical front face 2c. On the front face 2c a disk slot 17 is provided for inserting and removing disks from the disk drive unit 20. The disk slot 17 is closed by a front portion 24a of the disk tray 24 which is formed so as to mate with the contour of the disk slot. In addition, a disk eject button 18 is provided on one side of the disk slot 17.

In addition, also provided on the front face 2c of the casing 2, at a position below the disk slot 17, are connectors 14, 14, for connecting with connectors 16, 16 each associated with respective controllers 15. When the controllers 15 and a display means such as a television (not shown) are connected to the ROM computer 1 software contained on an optical disk or a ROM cartridge may be manipulated via cursor buttons 15a and play buttons 15b provided on each controller such that two persons may play a game, for example, which is provided in the respective disk or ROM cartridge 10.

Hereinbelow, a second embodiment of the present invention will be described with reference to Figs. 3 and 4. For brevity, in the disclosure of the second embodiment, like elements from the above first embodiment will not be described in detail.

Referring to Fig. 3, a second embodiment of a ROM computer 1 includes the various parts described in the above first embodiment, including lower and upper casings 2a, 2b. The second embodiment differs from the first embodiment chiefly in the positional arrangement of the disk drive 20 and the positions of the various control buttons etc. provided on the upper casing 2b. As may be seen in Fig. 3, the casing 2 is substantially box-like and has a slightly higher profile than that of the first embodiment. On the upper casing 2b a cartridge port 7 is provided at a rear portion thereof substantially similar to the first embodiment. The eject button 11 is provided at a substantially top center portion of the upper casing 2b and a power switch 12 and a reset button 13 are provided at left and right sides thereof respectively. The connectors 14, 14 for connecting with the connectors 16, 16 of the controllers 15 are provided on an upper part of the front face 2c and the disk slot 17 and the disk eject button 18 are provided on a lower part of the front face 2c.

As may be seen in Fig. 4, the disk drive unit 20 is set slightly back from the front face 2c of the casing 2. Accordingly an arrangement of the disk tray 24 is modified so as to allow a front portion 24a thereof to neatly cover the disk slot 17 when the drive is closed. Further, an upper substrate 8 is provided for mounting the connector 5, which receives a ROM cartridge 10, at a position above the disk drive unit 20. Finally, a shape of the support framework 21 is formed such as to provide optimum support according to the above described arrangement. In other respects the second embodiment is similar to the first.

Thus according to the present embodiment, the disk drive unit 20 is installed substantially within the lower casing 2a, while the cartridge port, control buttons, and connectors are substantially associated with the upper casing 2b. This arrangement allows for easy assembly processes to be implemented for manufacturing the invention. It will be noted that the same construction of the disk drive unit itself may be utilized for each of the above first and second embodiments.

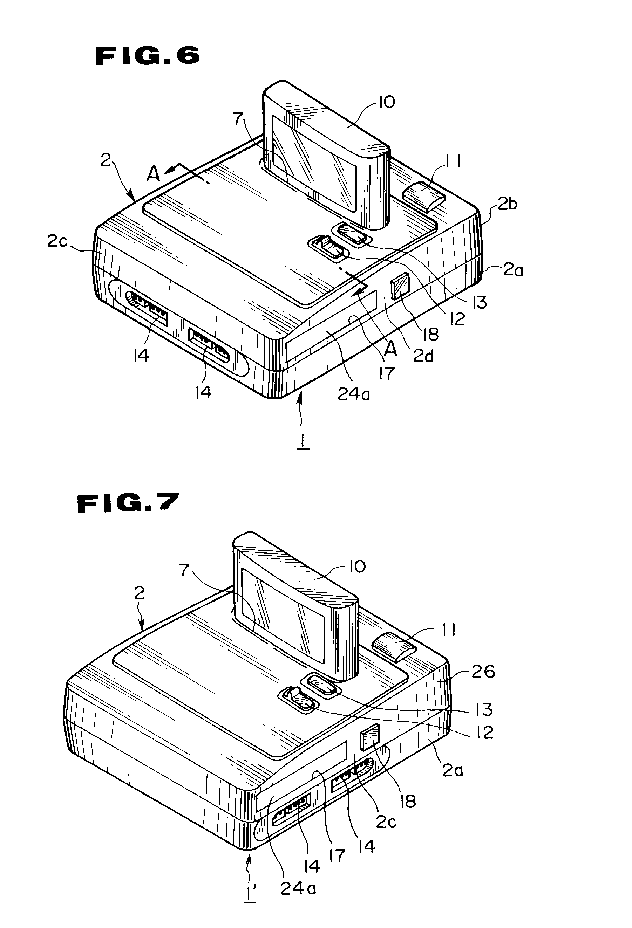

Hereinbelow, a third embodiment of the present invention will be described with reference to Figs. 6 - 9.

In Fig. 6, it can be seen that the casing 2 is a box-like construction with a substantially low profile similar to that of the above described first embodiment. In the third embodiment, in which like numerals will refer to like parts as in the previous embodiments, the positioning of the controls, connectors and openings differ substantially from the previous embodiments. First, on the upper casing 2b a cartridge port 7 is provided at a right side portion thereof, oriented longitudinally with respect to the front face 2c, to coincide with the location of a connector 5 which is similarly positioned, for receiving a ROM cartridge 10, substantially as in to the previous embodiments. The eject button 11 is provided substantially at a forward right front portion of the upper casing 2b, to the right of the cartridge port 7. A power switch 12 and a reset button 13 are respectively provided side by side, at a substantially forward center portion of the upper casing 2b, at a position to the left of the cartridge port 7. The disk slot 17 with the disk eject button 18 therebeside are provided on an upper part of the front face 2c of the casing 2, and connectors 14, 14 for connecting with the connectors 16, 16 of the controllers 15 are provided on a lower part of a side face 2d of the casing 2.

In addition, Fig. 7 shows a fourth embodiment of the present invention. The fourth embodiment differs from the first embodiment only in the placement of the connectors 14, 14 for connection to the controllers 15, 15 via the controller connectors 16, 16. In the present embodiment, the connectors 14, 14 are positioned at a lower portion of the front face 2c at a location just beneath the disk slot 17. In other respects the fourth embodiment is identical to the third embodiment.

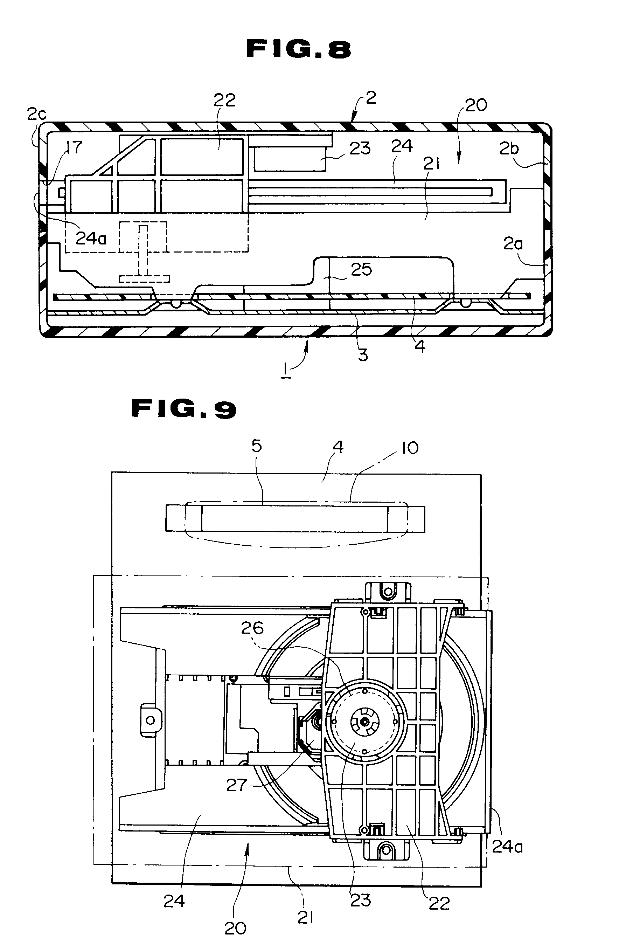

In Fig. 8 it can be seen that installation of the disk drive unit 20, in the above described third and fourth embodiments, is accomplished in substantially the same manner as for the above described first embodiment. Fig. 9 shows a plan view of the disk drive unit 20 as installed in the third and fourth embodiments. As can be seen, the physical arrangements are the same as the in previous embodiments except the the disk drive 20 and the connector 5 with the cartridge port 7 are arranged so as to be longitudinally parallel. This arrangement allows the ROM computer to achieve greater compactness.

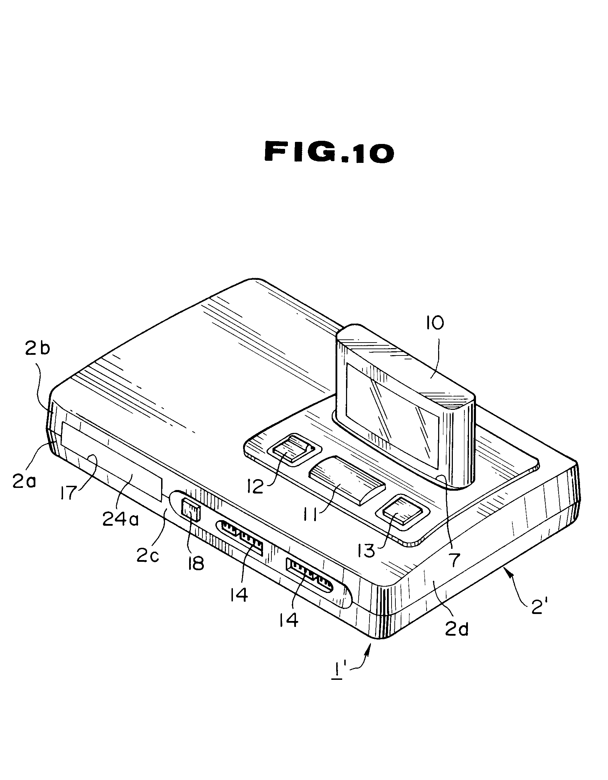

Finally, Fig. 10 shows a perspective view of a sixth embodiment of a ROM computer according to the present invention. In this embodiment the arrangements of the controls, connectors and cartridge port is the same as in the above disclosed prior art. However, the casing 2 is formed so as to have a considerably wider front face 2c. That is to say, the casing 2 is substantially rectangular in shape with a dimension of the front face 2c being greater than a dimension of the side face 2d. Thus, in the present embodiment, the disk drive unit 20 is installed alongside the cartridge game computer. This allows the unit to enjoy a low profile and also simplifies manufacturing.

Thus according to the present invention, a integrated ROM computer is disclosed which may utilize either of cartridge or disk format software with no need for manual connection of peripherals. Further, the combination allows several arrangements suitable to easy transportation and storage of the unit. Since manual interconnection is not required the unit becomes easy to use for children, who often utilize such game computers. Also, placement of the disk slots, cartridge ports and controller connectors can be accomplished to as to eliminate interference, such as connecting cable from the controllers becoming caught in the disk tray for example, which may inhibit playing enjoyment or lead to damage to the unit.

While the preferred embodiment discloses an optical disk drive, a standard disc drive, optical drive, or other new media may be used in place thereof. In addition, since the all-in-one casing of the present invention is not densely packed, space is available within the unit for installation of additional peripherals such as a modem accessory which will allow users of popular software, such as the players of a popular game, for example, to share data, such as game scores, via telephone lines, in a simple fashion from the computer unit itself again without need of external connection to peripheral devices.

Finally, while the preferred embodiment has been disclosed as utilizing external controllers which are connected to the main body of the computer unit, the play controls mounted on the controllers may alternatively be mounted on the main body of the casing itself thus eliminating the need for externally connected play controls.

While the present invention has been disclosed in terms of the preferred embodiment in order to facilitate a better understanding thereof, it should be appreciated that the invention can be embodied in various ways without departing from the principle of the invention. Therefore, the invention should be understood to include all possible embodiments and modification to the shown embodiments which can be embodied without departing from the principle of the invention as set forth in the appended claims.

## Claims

1. A video game computer comprising:
    a CPU;
    first receiving means (5, 7), associated with said CPU, for connectably receiving a first software medium;
    second receiving means (17, 20, 24), associated with said CPU, for connectably receiving a second software medium;
    control means (14, 15) allowing interactive use of said first or second software mediums;
    a casing (2), receiving at least said first receiving means (5, 7), said second receiving means (17, 20, 24) and said CPU therein.

2. A video game computer as set forth in claim 1, wherein said casing (2) further includes a substrate (4) for mounting said CPU and said first receiving means (5, 7), a chassis (3) for mounting said substrate (4) and a support framework (21) for mounting said second receiving means (17, 20, 24).

3. A video game computer as set forth in claim 1 or 2, wherein said first receiving means (5, 7) is a pin connector and said first software medium is a ROM cartridge compatible with said pin connector.

4. A video game computer as set forth in claim 1 or 2, wherein said first receiving means is a pin connector and said first software medium is an IC card compatible with said pin connector.

5. A video game computer as set forth in anyone of claims 1 to 4, wherein said second receiving means (17, 20, 24) is a disk drive and said second software medium is a disk.

6. A video game computer as set forth in claim 5, wherein said disk drive is an optical disk drive (20) and said second software medium is an optical disk.

7. A video game computer as set forth in claim 5, wherein said disk drive is a CD ROM disk drive and said second software medium is a ROM CD.

8. A video game computer as set forth in anyone of claims 1 to 7, wherein said second receiving means (17, 20, 24) is mounted in said casing (2) at a position below said first receiving means (5, 7).

9. A video game computer as set forth in anyone of claims 1 to 7, wherein said second receiving means is mounted in said casing at a position above said first receiving means.

**10.** A video game computer as set forth in anyone of claims 1 to 7, wherein said second receiving means is mounted in said casing at a position beside said first receiving means.

**11.** A video game computer as set forth in anyone of claims 1 to 10, wherein said second receiving means (17, 20, 24) opens at a substantially vertical front face (2c) of said casing (2).

**12.** A video game computer as set forth in anyone of claims 1 to 10, wherein said second receiving means opens at a substantially vertical side face (2d) of said casing (2).

**13.** A video game computer as set forth in anyone of claims 1 to 12, wherein controller connectors (14, 16) are provided on the same substantially vertical face (2c, 2d) of said casing (2) as said second receiving means (17, 20, 24) at a position below said second receiving means (17, 20, 24).

**14.** A video game computer as set forth in anyone of claims 1 to 12, wherein controller connectors (14, 16) are provided on the same substantially vertical face (2c, 2d) of said casing (2) as said second receiving means (17, 20, 24) at a position above said second receiving means (17, 20, 24).

**15.** A video game computer as set forth in anyone of claims 1 to 12, wherein controller connectors (14, 16) are provided on a substantially vertical face (2d) of said casing (2) other than that (2c) on which said second receiving means (17, 20, 24) is provided.

**16.** A video game computer as set forth in anyone of claims 1 to 15, wherein said second receiving means (17, 20, 24) is associated with an eject button (18) for facilitating removal of said disk.

**17.** A video game computer as set forth in anyone of claims 1 to 16, wherein said CPU is a 16-bit CPU provided on a semiconductor chip.

**18.** A video game computer as set forth in anyone of claims 1 to 17, wherein said control means include at least a power switch (12), a reset button (13), a cursor moving button (15a), and a play button (15b).

**19.** A video game computer as set forth in claim 18, wherein said reset button (13) and said power switch (12) are provided on an upper surface of said casing (2) and separated from said cursor moving button (15a) and said play button (15b).

**20.** A video game computer as set forth in anyone of claims 1 to 19, wherein said first receiving means (5, 7) is mounted on a top surface of said casing (2) for vertically mounting said first software medium when connected.

**21.** A video game computer as set forth in anyone of claims 1 to 19, wherein said first and second receiving means are mounted so as to be longitudinally parallel within said casing (2).

**22.** A video game computer comprising:
a 16-bit CPU;
a cartridge port (7) associated with said CPU for receiving ROM cartridges therein;
an optical disk drive (20) associated with said CPU for receiving an optical disk therein;
a casing (2) enclosing said cartridge port (7) and said optical disk drive (20) therein and having therein a substrate (4) for mounting said CPU and a connector (5) of said cartridge port;
control means (15) for interactive control of software contained in said ROM cartridge or on said optical disk;
connection means for connecting said video game computer (1) to display means for displaying software contents.

**23.** A video game computer as set forth in claim 22, wherein said optical disk drive (20) is retained within said casing (2) on a support framework (21) formed so as to suitably position and secure said optical disk drive (20) relative other components contained in said casing (2).

**24.** A video game computer as set forth in claim 22 or 23, wherein said optical disk drive (20) is mounted in said casing (2) at a position below said cartridge port (7).

**25.** A video game computer as set forth in claim 22 or 23, wherein said optical disk drive (20) is mounted in said casing (2) at a position above said connector of said cartridge port.

**26.** A video game computer as set forth in claim 22 or 23, wherein said optical disk drive (20) is mounted in said casing (2) at a position beside said cartridge port (7).

**27.** A video game computer as set forth in anyone of claims 1 to 26, wherein said casing (2) is comprised of box-like upper and lower sections (2a, 2b), an upper edge of the lower section (2a) mating with a lower edge of the upper section (2b).

28. A video game computer as set forth in anyone of claims 22 to 27, wherein said optical disk drive (20) slidingly opens at a substantially vertical front face of said casing (2).

29. A video game computer as set forth in claim 22 to 27, wherein said optical disk drive (20) slidingly opens at a substantially vertical side face of said casing (2).

30. A video game computer as set forth in anyone of claims 1 to 29, wherein said control means is comprised of an external controller unit (15) which is detachably connected to said video game computer (1) via controller connectors (14, 16).

31. A video game computer as set forth in claim 30, wherein a plurality of controller connectors (14, 16) is provided for connection to a plurality of said external control units (15).

32. A video game computer as set forth in claim 30 or 31, wherein said controller connectors (14, 16) are provided on the same substantially vertical face (2c, 2d) of said casing (2) as said optical disk drive (20) at a position below said optical disk drive (20).

33. A video game computer as set forth in claim 30 or 31, wherein said controller connectors (14, 16) are provided on the same substantially vertical face (2c, 2d) of said casing (2) as said optical disk drive (20) at a position above said optical disk drive.

34. A video game computer as set forth in claim 30 or 31, wherein said controller connectors (14, 16) are provided on a substantially vertical face (2d) of said casing (2) other than that (2c) on which said optical disk drive (20) opens.

35. A video game computer as set forth in anyone of claims 1 to 34, wherein said first receiving means and said cartridge port (5, 7), respectively, are associated with an eject button (11) for facilitating removal of said cartridge.

36. A video game computer as set forth in claim 31, wherein said second receiving means and said optical disk drive (20), respectively, are associated with an eject button (18) for facilitating removal of said disk.

37. A video game computer as set forth in anyone of claims 1 to 36, wherein said control means include a power switch (12), a reset button (13), a cursor moving button (15a), and a play button (15b).

38. A video game computer as set forth in anyone of claims 1 to 36, wherein a reset button (13) and a power switch (12) are provided on an upper surface of said casing (2) and a cursor moving button (15a) and a play button (15b) are provided on an external controller (15).

39. A video game computer as set forth in anyone of claims 22 to 38, wherein said cartridge port is mounted on a top surface of said casing (2) for vertically mounting said ROM cartridge when connected.

40. A video game computer as set forth in anyone of claims 22 to 38, wherein said cartridge port and said optical disk drive are mounted so as to be longitudinally parallel within said casing.

41. A video game computer as set forth in anyone of claims 1 to 40, wherein said computer (1) is connectable to display means for displaying software contents.

42. A video game computer as set forth in claim 41, wherein said display means is a television set.

43. A video game computer as set forth in claim 41, wherein said display means is a video monitor.

44. A video game computer as set forth in anyone of claims 1 to 43, further including networking means for interconnecting said video game computer (1) with other computers.

45. A video game computer as set forth in claim 44, wherein said networking means is a telephone modem.

46. A video game computer as set forth in claim 44 or 45, wherein said networking means is contained within said casing.

47. A video game computer as set forth in anyone of claims 22 to 46, wherein said optical disk drive (20) is a CD ROM drive and said optical disk is a ROM CD.

**FIG.1**

**FIG.3**

FIG.2

FIG. 4

# FIG.5

# FIG.6

# FIG.7

# FIG.8

# FIG.9

# FIG.10

# FIG.11
## *(PRIOR ART)*